# EUROPEAN PATENT SPECIFICATION

(11) **EP 0 504 809 B1**
(45) Date of publication and mention of the grant of the patent: **21.02.1996**
(21) Application number: 92104597.7
(22) Date of filing: 17.03.1992
(51) Int. Cl.: F16K 5/06

(54) **Ball valve for cutting off the flow of fluids in ducts**
Kugelventil um einen Strömungsdurchfluss eines Rohrs zu Schliessen
Boiseau sphérique pour couper le débit d'un fluide dans un conduit

(30) Priority: 19.03.1991 IT MI910216 U
(43) Date of publication of application: 23.09.1992
(73) Proprietor: TECO S.r.l., Passirano Fraz. Camignone (Brescia) (IT)
(72) Inventor: Colombo, Renato, I-28021 Borgomanero, (Novara) (IT)
(74) Representative: Modiano, Guido, Dr.-Ing.

(56) References cited:
- GB-A- 1 256 727
- US-A- 3 107 546

## Description

The present invention relates to a ball valve for cutting off the flow of fluids in ducts.

Ball valves for the above mentioned use are already known which comprise a valve body in which a ball-shaped element for cutting off the flow of fluid can rotate when actuated manually.

In order to define stroke limit positions for the closure and opening of said ball-shaped element in the valve body, said valve body generally has protrusions, internal or external to said body, against which for example portions of the ball-shaped element or of the actuation handle thereof can abut in order to define said closure and opening stroke limit positions.

However, the provision of said stroke limit abutments is currently rather onerous, and in the case of stroke limiting elements arranged inside the valve body, they are usually constituted by stroke limit blocks which are defined inside the valve body during the manufacture thereof, with quite complicated successive mechanical machining operations.

Thus, in known ball valves, the provision of said internal stroke limits generally requires that, for given dimensions of the ducts to be cutoff, the valve be manufactured with a considerable height, with a consequent weakening of said valve.

Such an example of a ball valve and with the features set forth in the preamble of claim 1 is disclosed in the prior document GB-A-1 256 727.

The aim of the present invention is to eliminate at least the above mentioned problems by providing a ball valve for cutting off the flow of fluids in ducts which has opening and closure stroke limit means which have an improved and extremely simple structure.

Within the scope of this aim, a particular object of the present invention is to provide a ball valve which, despite the presence of said stroke limit means inside the valve body, can be manufactured with a particularly small height and thus have considerable characteristics of mechanical strength.

A further object of the present invention is to provide a ball valve wherein the opening and closure stroke limit means can be manufactured with minimal mechanical machining and can be easily and rapidly assembled to the ball-shaped element of the valve, allowing said ball-shaped element to be rotated either clockwise or counterclockwise.

Another object of the present invention is to provide a ball valve wherein the stroke limit means comprise a minimal number of component parts.

Not least object of the present invention is to provide a ball valve, comprising improved opening and closure stroke limit means, which is extremely competitive from a merely economical point of view and requires substantially no maintenance.

According to an aspect of the present invention, this aim, the objects mentioned above and others which may become apparent hereinafter are achieved by a ball valve for cutting off the flow of fluid in ducts which has the characteristics defined in the characterizing part of the main claim.

Further characteristics of the ball valve according to the invention are defined in the dependent claims.

Further peculiarities and advantages of the ball valve according to the invention will become apparent hereinafter from the following detailed description of a currently preferred embodiment thereof, illustrated only by way of non-limitative example in the accompanying drawings, wherein:
figure 1 is an exploded perspective view of the ball valve according to the invention, with the bonnet removed;
figure 2 is a top view of the ball valve of figure 1, with its bonnet removed and with the valve ball in the flow cutoff position;
figure 2A is a partially sectional elevation view of the valve, with the valve ball in the flow cutoff position;
figure 3 is a top view of the valve, similar to figure 1, with the valve ball in the position which allows flow; and
figure 3A is a partially sectional elevation view of the ball valve according to the invention with the ball in the position which allows flow.

With reference to the above figures, the ball valve according to the invention, which is generally designated by the reference numeral 1, comprises a substantially hollow cup-shaped central valve body 2, for example made of metal, with which two tubular open ends 3 and 4 are rigidly associated and are respectively internally threaded at 5 and 6, in a manner which is in any case known, for connection to the respective duct to be cutoff (not shown).

In an upward position, the valve body 2 has an inlet 7 which has a substantially circular cross-section and has an internal thread 8 provided in order to removably receive the bonnet of the valve, not illustrated, which can be threaded to the internal thread 8. According to the invention, two opposite flat portions, respectively 9 and 10, are provided inside the valve body 8 and substantially define chordal portions of the circumferential transverse cross-section of the inlet 7; said flat portions 9 and 10 are advantageously arranged directly below the last turn 11 of the inner thread 8 mentioned earlier.

In this manner, as can be easily understood, the valve body 2 can be manufactured with an extremely compact configuration, i.e. with a small height, with a consequent great strength of said valve body.

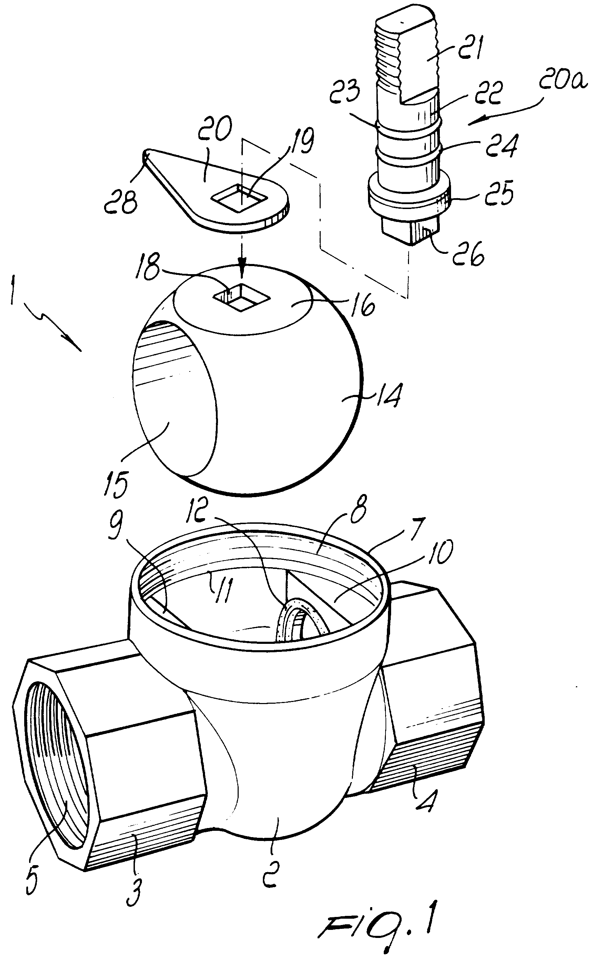

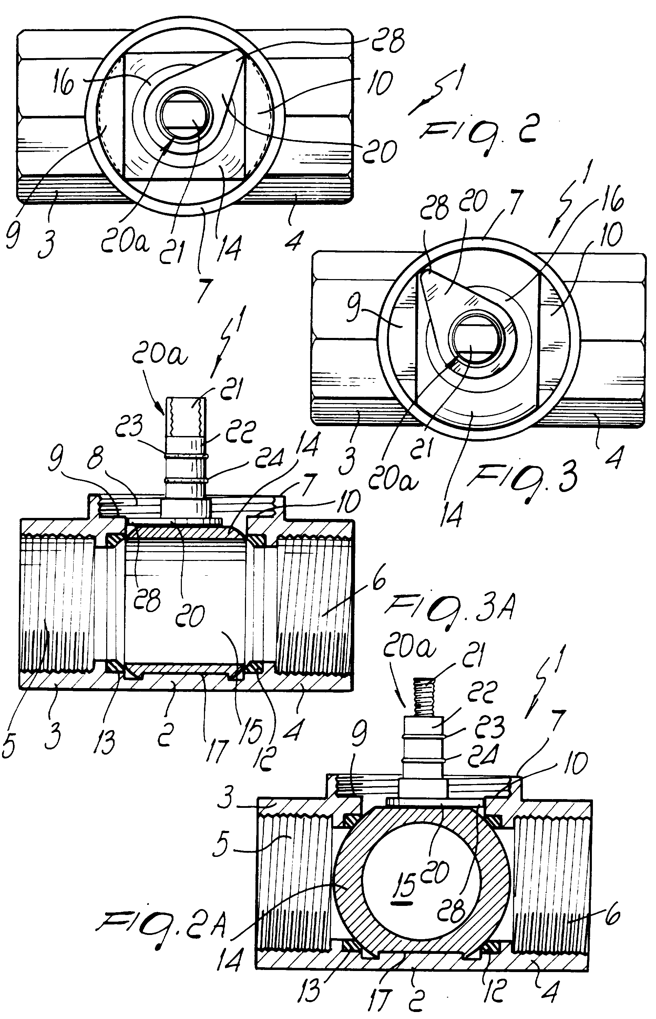

Known gaskets 12 and 13, against which the cutoff ball sealingly abuts, are provided below the two flat portions 9 and 10 (see also figures 2A and 3A).

The cutoff ball, in a known manner, comprises a ball body 14 in which an axial flow passage 15 is defined. In an upward position, according to the invention, the ball-shaped element 14 comprises a first flat portion 16; a similar lower abutment flat portion 17 is defined on the bottom part of the ball-shaped element.

As can be seen, a through hole 18 is defined through the top flat portion 16 of the ball 14 and has an advantageously square transverse cross-section; a corresponding hole 19, which has a correspondingly square cross-section and which is defined in a wing-shaped element 20 provided in order to act as stop and stroke-limiting element for the rotation of the spherical element 14, can be aligned with respect to said through hole 18.

The securing of the stroke limit wing 20 to the ball-shaped element 14, in particular, is obtained by means of the conventional stem-like element 20a already provided in order to facilitate the extraction of the ball element 14.

As can be seen from figure 1, the stem 20a has an upper threaded portion 21, with which the handle, not shown, for the actuation of the ball 14 engages; a central portion with a substantially circular cross-section 22, which supports, in a known manner, conventional gaskets 23 and 24; and, according to the invention, a protruding flange-like portion 25 as well as a lower portion 26 which also has a substantially square cross-section.

In this manner, after abutting the wing 20 so as to align its hole 19 with the hole 18 of the ball-shaped element 14, the portion 26, whose dimensions are advantageously slightly larger than those of the holes 18 and 19, is compressed within the hole 19 and the hole 18, so as to lock as a consequence of a slight compressive deformation. In this manner, the wing 20 can be easily secured to the ball 14, with the lower surface of the flange 25 in abutment against the peripheral portion of the square hole 19.

As can be seen, the wing 20 has a substantially drop-like configuration with a rounded tip portion 28.

It is evident from the above description that the wing 20, in order to provide the opening and closure stroke limit positions, is provided so as to cooperate with the flat portion 9 for the opening position and with the flat portion 10 of the valve body 2 for the closure position. The abutment of the wing 20 against the edge of the flat portions 9 and 10, in particular, is obviously obtained by making the ball 14 move, by rotation through substantially 90°, from the valve opening position, wherein the wing 20 is in abutment against the edge of the flat portion 9, to the valve closure position, wherein the wing 20 is in abutment against the edge of the flat portion 10. These two opening and closure and mutual abutment positions of the wing against said flat portions are clearly shown in figures 2 and 3.

In the indicated case, the closure movement occurs clockwise. However, it is evident that by appropriately orientating the wing 20 it can also occur counterclockwise.

From the above it can be seen that the ball valve according to the invention fully achieves the intended aim and objects.

In particular, a ball valve has been provided which has improved stop means which can be easily obtained, as regards the two flat portions, during the manufacture of the valve body, whereas as regards the stroke limit wing, it can be easily and rapidly associated with the ball-shaped element by means of extremely simple and rapid operations which substantially do not affect the cost of the finished valve.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Ball valve for cutting off the flow of fluids in ducts, comprising: a hollow valve body (2) having an upper inlet (7) and two open ends for removable coupling to a duct; a hollow ball-shaped cutoff element (14) accommodated in said hollow body (2), said ball-shaped cutoff element having a passage (15) for axial flow and being rotatably movable between a position which allows flow and a flow cutoff position; a stem (20a) adapted for being rigidly associated with said ball-shaped element, said stem being engageable by a handle-like actuation element for rotating said ball-shaped element through a preset angle from said position which allows flow to said flow cutoff position and vice versa; a stop and stroke-limiting wing (20) which is rigidly associated with said ball-shaped element and which cooperates with abutment means (9,10) defined within said hollow body (2) of said valve in a manner suitable for defining respectively, when said ball-shaped element is rotated, a flow-allowing stroke limit position and a flow-cutoff stroke limit position of said ball-shaped element in said hollow body, characterized in that said abutment means comprises two opposite flat portions (9, 10), defining chordal portions of said upper inlet (7), and said ball-shaped element (14) comprises a first top flat portion (16) and a second bottom abutment flat portion (17), gaskets (12, 13) being furthermore provided under each of said two opposite flat portions (9,10), said ball-shaped element (14) abutting sealingly against said gaskets.

2. Ball valve according to claim 1, characterized in that said stop wing comprises a substantially drop-shaped plate-like tab (20) which has a rounded end (28) and which abuts on said top flat portion (16) of said ball-shaped element (14) and which is rigidly associated with said ball-shaped element by means of the tight-fit securing interposition of said tab between said top flat portion of said ball-shaped element and an abutment flange (25) which is rigidly associated with said stem-like element (20a).

3. Ball valve according to claim 2, characterized in that said drop-shaped tab (20) is adapted to be orientatable with respect to said opposite flat portions (9, 10) to either allow a clockwise direction closure movement or a counterclockwise direction closure movement.

4. Ball valve according to claim 1, characterized in that said upper inlet (7) of said hollow body (2) has an inner thread (8), said opposite flat portions (9,10) being arranged substantially below the last lower turn (11) of said inner thread.

5. Ball valve according to any one of the preceding claims, characterized in that the lower portion (26) of said stem engages said tab with a substantially square cross-section, a square hole (19) and a corresponding further square hole (18) being defined through said tab (20) and said top flat portion (16) of said ball-shaped element respectively, said holes being suitable for receiving, with tight interference fit, said lower portion of said stem, which has a substantially square cross-section.

## Patentansprüche

1. Kugelventil zum Absperren des Flusses von Flüssigkeiten in Rohren, das aufweist: einen hohlen Ventilkörper (2) mit einem oberen Einlaß (7) und zwei offenen Enden zum entfernbaren Koppeln mit einem Rohr; ein hohles, kugelförmiges, in besagtem Hohlkörper (2) angeordnetes Absperrelement (14), wobei besagtes kugelförmiges Absperrelement einen Durchlaß (15) für axialen Fluß aufweist und drehbar zwischen einer einen Fluß erlaubenden Stellung und einer Fluß-Absperr-Stellung bewegbar ist; einen Schaft (20a), der dafür ausgelegt ist, starr mit besagtem kugelförmigem Element verbunden zu werden, wobei besagter Schaft durch ein griffähnliches Betätigungselement eingreifbar ist, um besagtes kugelförmiges Element um einen festgesetzten Winkel aus besagter, einen Fluß erlaubenden Stellung in besagte Fluß-Absperr-Stellung und zurück zu drehen; einen anschlagbegrenzenden Ansatz (20), der starr mit besagtem kugelförmigem Element verbunden ist und der mit einem Anschlagmittel (9, 10) zusammenwirkt, das innerhalb des besagten Hohlkörpers (2) des besagten Ventils auf eine Weise definiert ist, die dazu geeignet ist, eine flußerlaubende Anschlagbegrenzungsstellung bzw. eine Fluß-Absperr-Anschlagbegrenzungsstellung des besagten kugelförmigen Elements in besagtem Hohlkörper zu definieren, wenn besagtes kugelförmiges Element gedreht wird, dadurch gekennzeichnet, daß besagtes Anschlagmittel zwei gegenüberliegende Flachabschnitte (9, 10) aufweist, die Sehnenabschnitte des besagten oberen Einlasses (7) definieren, und besagtes kugelförmiges Element (14) einen ersten kopfseitigen Flachabschnitt (16) und einen zweiten fußseitigen Anschlag-Flachabschnitt (17) aufweist, wobei des weiteren Dichtungen (12, 13) unter jedem der besagten zwei gegenüberliegenden Flachabschnitte (9, 10) vorgesehen sind, wobei besagtes kugelförmiges Element (14) abdichtend gegen besagte Dichtungen anschlägt.

2. Kugelventil nach Anspruch 1, dadurch gekennzeichnet, daß besagter Anschlagansatz einen im wesentlichen tropfenförmigen tellerähnlichen Vorsprung (20) aufweist, der ein abgerundetes Ende (28) aufweist und der an besagtem kopfseitigem Flachabschnitt (16) des besagten kugelförmigen Elements (14) anschlägt und der starr mit besagtem kugelförmigem Element mittels der paßgenauen Sicherungseinfügung des besagten Vorsprungs zwischen besagtem kopfseitigem Flachabschnitt des besagten kugelförmigen Elements und einem Anschlagflansch (25) verbunden ist, der starr mit besagtem schaftähnlichen Element (20a) verbunden ist.

3. Kugelventil nach Anspruch 2, dadurch gekennzeichnet, daß besagter tropfenförmiger Vorsprung (20) dafür ausgelegt ist, in bezug auf besagte gegenüberliegende Flachabschnitte (9, 10) ausrichtbar zu sein, um eine Schließbewegung entweder in Richtung des Uhrzeigersinns oder in Richtung entgegen dem Uhrzeigersinn zu erlauben.

4. Kugelventil nach Anspruch 1, dadurch gekennzeichnet, daß besagter oberer Einlaß (7) des besagten Hohlkörpers (2) ein Innengewinde (8) aufweist, wobei besagte gegenüberliegende Flachabschnitte (9, 10) im wesentlichen unterhalb der letzten unteren Windung (11) des besagten Innengewindes angeordnet sind.

5. Kugelventil nach einem der vorangehenden Ansprüche, dadurch gekennzeichnet, daß der untere Abschnitt (26) des besagten Schafts in besagten Vorsprung mit einem im wesentlichen quadratischen Querschnitt eingreift, wobei ein quadratisches Loch (19) bzw. ein entsprechendes weiteres quadratisches Loch (18) durch besagten Vorsprung (20) bzw. besagten kopfseitigen Flachabschnitt (16) des besagten kugelförmigen Elements definiert sind, wobei besagte Löcher dazu geeignet sind, besagten unteren Abschnitt des besagten Schafts, der einen im wesentlichen quadratischen Querschnitt hat, mit knappem Festsitz aufzunehmen.

## Revendications

1. Robinet à boisseau sphérique pour couper l'écoulement d'un fluide dans un conduit, comprenant : un corps de robinet creux (2) ayant une entrée supérieure (7) et deux extrémités ouvertes pour le couplage, de façon amovible, à un conduit ; un élément de coupure creux de forme sphérique (14) logé dans ledit corps creux (2), ledit élément de coupure de forme sphérique ayant un passage (15) pour l'écoulement axial et étant mobile, de façon rotative, entre une position qui autorise l'écoulement et une position de coupure d'écoulement ; une tige (20a) adaptée pour être associée de façon rigide audit élément de forme sphérique, ladite tige étant engageable par un élément d'actionnement en forme de poignée pour entraîner en rotation ledit élément de forme sphérique sur un angle prédéterminé à partir de ladite position qui autorise l'écoulement vers ladite position de coupure d'écoulement et réciproquement ; une ailette de butée et de limitation de course (20), qui est rigidement associée audit élément de forme sphérique et qui coopère avec des moyens de butée (9,10) définis dans ledit corps creux (2) dudit robinet, de façon appropriée pour définir respectivement, quand ledit élément de forme sphérique est tourné, une position de limitation de course autorisant l'écoulement et une position de limitation de course de coupure d'écoulement dudit élément de forme sphérique, dans ledit corps creux,
caractérisé en ce que lesdits moyens de butée comprennent deux parties plates opposées (9,10), définissant des portions de corde de ladite entrée supérieure (7), et ledit élément de forme sphérique (14) comprend une première partie plate haute (16) et une seconde partie plate de butée basse (17), des joints d'étanchéité (12,13) étant de plus prévus sous chacune desdites deux parties plates opposées (8,9), ledit élément de forme sphérique (14) venant en butée de façon étanche contre lesdits joints.

2. Robinet à boisseau sphérique selon la revendication 1,
caractérisé en ce que ladite ailette de butée comprend une patte en forme de plaque conformée sensiblement en goutte (20), qui présente une extrémité arrondie (28) et qui vient en butée sur ladite partie plate haute (16) dudit élément de forme sphérique (14), et qui est rigidement associée audit élément de forme sphérique par l'intermédiaire de l'interposition de fixation, par ajustement serré, de ladite patte entre ladite partie plate haute dudit élément de forme sphérique et un rebord de butée (25) qui est rigidement associé audit élément en forme de tige (20a).

3. Robinet à boisseau sphérique selon la revendication 2,
caractérisé en ce que ladite patte en forme de goutte (20) est adaptée pour être orientable par rapport auxdites parties plates opposées (9,10), pour autoriser soit un mouvement de fermeture dans le sens dextrorsum ou un mouvement de fermeture dans le sens senestrorsum.

4. Robinet à boisseau sphérique selon la revendication 1,
caractérisé en ce que ladite entrée supérieure (7) dudit corps creux (2) présente un taraudage (8), lesdites parties plates opposées (9,10) étant agencées sensiblement sous la dernière spire inférieure (11) dudit taraudage.

5. Robinet à boisseau sphérique selon l'une quelconque des revendications précédentes,
caractérisé en ce que la partie inférieure (26) de ladite tige engage ladite patte avec une section transversale sensiblement carrée, un trou carré (19) et un autre trou carré correspondant (18) étant définis dans ladite patte (20) et dans ladite partie plate haute (16) dudit élément de forme sphérique, respectivement, lesdits trous étant appropriés pour recevoir, avec un ajustement serré, ladite partie inférieure de ladite tige, qui présente une section transversale sensiblement carrée.
